# FASCICULE DE BREVET EUROPEEN

(11) **EP 4 644 252 B1**
(45) Date de publication et mention de la délivrance du brevet: **21.10.2026**
(21) Numéro de dépôt: 25171858.1
(22) Date de dépôt: 23.04.2025
(51) Int. Cl.: B64D 27/33, B64D 31/18

(54) **SYSTEME ET PROCÉDÉ DE GESTION D'UNE SOURCE D'ÉNERGIE DANS UNE ARCHITECTURE DE PROPULSION HYBRIDE ÉLECTRIQUE**
SYSTEM UND VERFAHREN ZUR VERWALTUNG EINER ENERGIEQUELLE IN EINER HYBRIDEN ELEKTRISCHEN ANTRIEBSARCHITEKTUR
SYSTEM AND METHOD FOR MANAGING A POWER SOURCE IN AN ELECTRIC HYBRID PROPULSION ARCHITECTURE

(30) Priorité: 30.04.2024 FR 2404554
(43) Date de publication de la demande: 05.11.2025
(73) Titulaire: AIRBUS OPERATIONS (S.A.S.), 31060 Toulouse (FR); Airbus (S.A.S.), 31700 Blagnac (FR)
(72) Inventeur: ANTONIO, Gilian, 31060 TOULOUSE (FR); KAHALERRAS, Mohamed Khaled, 31060 TOULOUSE (FR); KORNSTAEDT, Lars, 31700 BLAGNAC (FR); PERROTTE, Lancelot, 31060 TOULOUSE (FR); DRISSI EL BOUZAIDI, Israe, 31060 TOULOUSE (FR); BASSET, Olivier, 31060 TOULOUSE (FR)
(74) Mandataire: Airbus-OPS SAS

(56) Documents cités:
- WO-A1-2023/091579
- US-A1- 2011 178 648
- US-A1- 2022 396 363
- US-B2- 10 576 843

## Description

La présente invention concerne un système et un procédé de gestion de l'énergie électrique fournie par une source en énergie électrique telle qu'une batterie dans un aéronef présentant une architecture de propulsion hybride électrique.

La présente invention s'applique à des architectures d'alimentation en puissance mécanique par énergie hybride à savoir provenant à la fois de l'utilisation de carburant et de batteries dans laquelle une assistance électrique est apportée au moteur thermique. Les batteries permettent ainsi notamment d'apporter un surplus d'énergie au moteur pour des opérations nécessitant une grande puissance telles que le démarrage, le décollage ou l'atterrissage, une accélération moteur, une montée/descente en altitude, l'arrêt du moteur et d'éviter de le surdimensionner pour de courtes phases opérationnelles ou situations d'urgence. De telles architectures conduisent à une réduction de consommation de carburant et de l'empreinte carbone.

Le document US2022396363 décrit un procédé de gestion de l'usage des batteries déterminant des points de passage au niveau desquels l'énergie de la batterie est utilisée, ces points de passage étant déterminés à partir d'un plan de vol et de données provenant de la batterie.

Le document WO2023091579 se rapporte à l'architecture d'un turbocompresseur dans lequel il est prévu un contrôleur utilisant un plan de vol pour déterminer la demande en puissance prévue et si les batteries peuvent être utilisées.

Le document US10576843 divulgue un système de surveillance pour un avion électrique ou hybride pour détecter et alerter en cas de défaillance dans lequel des parcs de batteries différents sont utilisés suivant la puissance requise.

Le document US2011178648 révèle un procédé de gestion de l'énergie dans un avion électrique se basant sur des prédictions de poussée et une demande en énergie par segment de vol.

La présente invention a pour but d'optimiser l'utilisation de batteries et d'éviter de les décharger complètement avant la fin d'une mission ou dans une proportion telle que des besoins en sécurité nécessitant une alimentation par lesdites batteries ne puissent plus être assurés.

A cet effet, la présente invention concerne un aéronef comportant un système de gestion de l'énergie d'une source en énergie électrique dans une architecture de propulsion hybride électrique comprenant au moins un moteur thermique utilisant une combustion de carburant et ladite source en énergie électrique, l'aéronef comportant un système avionique et des composants communiquant des paramètres de l'aéronef, caractérisé en ce qu'il comprend :
- un module de gestion de l'énergie EM dans lequel sont stockées des fonctions disponibles pour une mission donnée de l'aéronef susceptibles d'être utilisées par le moteur et permettant une assistance par la source ainsi que la charge nécessaire associée nécessaire à leur exécution ;
- un module de contrôle MC de l'état des composants nécessaires à l'exécution de chacune de ces fonctions disponibles qui ont été transmises par le module de gestion avec lequel il est en liaison ainsi que de la quantité d'énergie nécessaire susceptible d'être délivrée par la source permettant d'autoriser leur exécution et de garantir celle des fonctions de sécurité, le module de contrôle étant lié auxdits composants, à la source en énergie électrique ainsi qu'à un module d'activation du moteur pour lui transmettre les fonctions autorisées suivant le contrôle effectué.

Le système de gestion de l'énergie permet ainsi d'optimiser le recours à l'assistance électrique tout en garantissant l'exécution des fonctions de sécurité jusqu'à la fin de la mission.

L'invention prévoit au moins l'une des caractéristiques optionnelles suivantes, prises isolément ou en combinaison.

Le module de gestion de l'énergie EM stocke un plan de gestion de l'énergie permettant de garantir l'exécution des fonctions de sécurité et prévoyant pour l'ensemble d'une mission, un ensemble de fonctions disponibles par segment de mission donné et une quantité d'énergie nécessaire pour chaque fonction pour ledit segment.

Le module de gestion de l'énergie EM stocke des plans de gestion dégradés de l'énergie prévoyant des mises à jour du plan de gestion en cas d'anomalies.

L'invention concerne également un procédé de gestion de l'énergie d'une source en énergie électrique dans un aéronef présentant au l'une des caractéristiques optionnelles présentées précédemment prises isolément ou en combinaison, caractérisé en ce qu'il comprend les étapes suivantes :
- à la réception de paramètre(s) aéronef déterminé(s) (ESn), transmission (étape B) d'un ensemble de fonctions disponibles stockées dans le module de gestion de l'énergie associé à ces paramètres au module de contrôle et de la charge nécessaire à l'exécution de ces fonctions et vérification par le module de contrôle du bon fonctionnement des composants de l'aéronef nécessaire à l'exécution des fonctions disponibles reçues et de la quantité d'énergie électrique de la source qui doit être suffisante pour assurer leur exécution et celle des fonctions de sécurité ;
- si les fonctions disponibles peuvent fonctionner correctement et la quantité d'énergie susceptible d'être délivrée par la source est suffisante (VFd), le module de contrôle autorise (étape C) l'exécution des fonctions et transmet les fonctions autorisées au module d'activation du moteur ;
- lorsque le moteur active une fonction autorisée (ActivFa), tout au long de l'exécution de ladite fonction, le module de contrôle vérifie (étape D) que ladite fonction autorisée ne consomme pas de manière anormale et si tel est le cas, le module de contrôle indique au moteur que l'autorisation pour la fonction en question est retirée (étape F).

Lorsque la consommation lors de l'exécution d'une fonction autorisée dépasse de manière anormale celle prévue d'un certain montant déterminé, à l'étape F, le module de contrôle envoie un signal au calculateur moteur EC lui indiquant que l'autorisation pour ladite fonction autorisée en cours est retirée au bout d'un certain nombre de secondes permettant de laisser le temps au calculateur moteur EC de se configurer en mode sans assistance électrique.

Dans une première étape A, des fonctions disponibles pour une mission de l'aéronef sont stockées dans le module de gestion de l'énergie ainsi que la charge nécessaire associée nécessaire à leur exécution.

Lorsque le calculateur moteur EC reçoit une demande d'activation d'une fonction, il vérifie (VFa) que la fonction est autorisée pour recourir à l'assistance électrique et exécuter la fonction concernée.

Le module de gestion de l'énergie vérifie en continu que la consommation en énergie est en concordance avec le plan d'énergie de la mission (étape BB) de manière à garantir un niveau de charge minimal pour l'exécution des fonctions de sécurité et en cas d'anomalie Vcons (Y), le plan d'énergie est mis à jour dans une étape CC et remplacé par un plan d'énergie dégradé.

Le module de gestion de l'énergie vérifie en continu que la consommation en énergie est en concordance avec le plan d'énergie dégradé (étape DD) de manière à garantir un niveau de charge minimal pour l'exécution des fonctions de sécurité et en cas d'anomalie Vconsdgr (Y), le plan d'énergie est mis à jour dans une étape CC et remplacé par un autre plan d'énergie dégradé.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue simplifiée de dessus d'un aéronef muni d'un système selon la présente invention ;
[Fig. 2] est une vue schématique du système de gestion de l'énergie selon la présente invention ;
[Fig. 3] est un synoptique d'un exemple des différents segments de mission identifiés pour une mission donnée d'un aéronef donné ;
[Fig. 4] est un diagramme du procédé de gestion de l'énergie selon la présente invention.

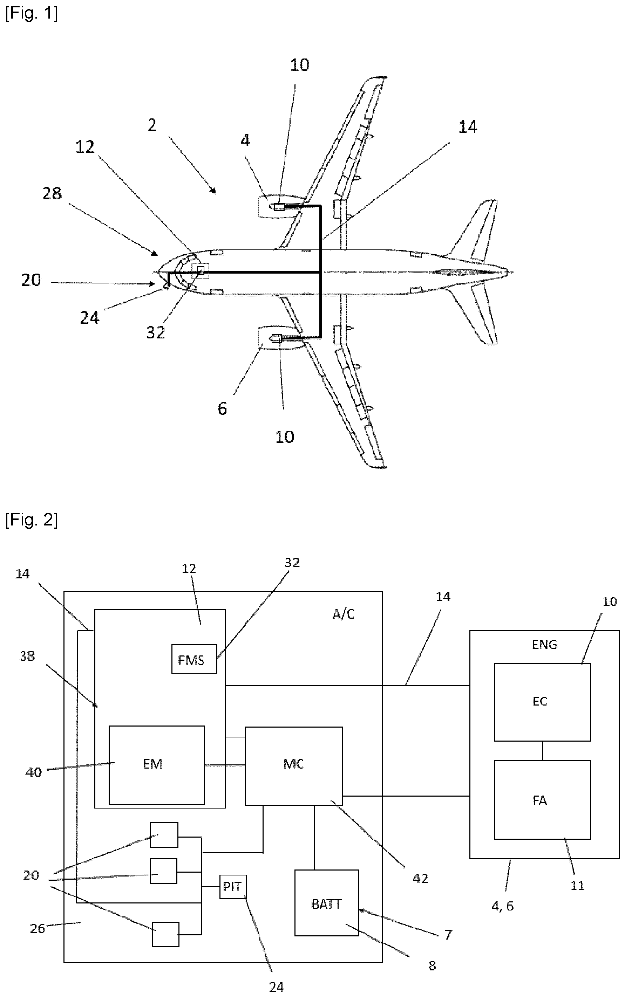

Comme représenté sur la figure 1, la présente invention se rapporte à un aéronef 2 pourvu d'une architecture de propulsion hybride électrique à savoir comme indiqué plus haut dont le moteur thermique peut être assisté électriquement. Dans une telle architecture, l'énergie électrique peut également être utilisée pour les besoins de l'aéronef comme par exemple ceux des équipements de l'aéronef et plus spécifiquement par exemple la gestion de l'air de la cabine appelée l'ECS (en langage anglo saxon, Environmental Control System). L'aéronef comporte au moins deux moteurs Eng 4, 6 thermiques ainsi qu'une source 7 en énergie électrique et ici plus précisément une batterie BATT 8 représentée sur la figure 2. Le moteur thermique 4, 6 peut être par exemple de type turboréacteur et plus précisément peut être pris pour exemple un turboréacteur à double flux (en langue anglo saxonne turbofan) ou encore de type moteur à soufflante non carénée. Chaque moteur 4, 6 comprend un calculateur EC moteur 10 et un module d'activation FA 11. Le module FA 11 peut être intégré au calculateur EC 10 ou être indépendant comme illustré sur la figure 2. Les calculateurs moteur 10 sont connectés à un système avionique 12, encore appelé cœur avionique, au moyen d'un réseau 14 de communication. Le réseau 14 de communication lie également le système avionique 12 à des composants 20 de l'aéronef qui lui transmettent des paramètres de l'aéronef. Les composants 20 sont tous les éléments, équipements et autres pièces nécessaires à l'exécution d'une fonction disponible. Sur la figure 1, l'un des composants, une sonde Pitot 24 PIT permettant de mesurer le paramètre de la vitesse de l'aéronef est représenté en exemple de composant 20 de l'aéronef 2.

La figure 2 représente schématiquement d'un côté l'aéronef A/C dans sa globalité sans les moteurs 4, 6 et de l'autre les moteurs Eng 4, 6. L'ensemble des systèmes représentés dans l'aéronef A/C peuvent être localisés à différents endroits possibles de celui-ci : c'est la raison pour laquelle ils ne sont pas représentés sur la figure 1. Le système avionique 12 de manière conventionnelle se trouve localisé essentiellement dans le cockpit 28 et/ou proche de celui-ci ce que schématise la figure 1 mais il pourrait en être autrement au moins pour une partie du système. La source 7 en énergie électrique est un terme générique pour désigner tout type de batterie, supercondensateur ou autre source de stockage d'énergie, ainsi que toute combinaison de sources de même type ou de types différents. La source 7 est dans la forme de réalisation illustrée et comme indiqué plus haut une batterie 8 et par exemple une batterie de type Lithium et plus précisément Lithium-ion ou selon un autre exemple une batterie LFP (lithium-fer-phosphate). Dans toute la suite de la description, on va se référer à la charge de la batterie mais si la source d'énergie est d'un autre type qu'une batterie, la charge correspond à la quantité d'énergie électrique restante susceptible d'être délivrée par la source. De manière schématisée et simplifiée, l'aéronef 2 comporte la partie aéronef A/C 26 permettant de contrôler l'aéronef pour effectuer son vol connectée à une partie moteur Eng 4, 6 permettant d'en assurer la propulsion. La partie aéronef A/C 26 comprend de nombreux modules de type connu tels que le module de gestion du vol 32 (en langue anglo saxonne flight management system dont l'acronyme est FMS). Le système avionique 12 du cockpit 28 est connecté à des composants 20 par le réseau 14 ainsi qu'aux moteurs 4, 6 ENG. La source 7, ici la batterie BATT 8, est connectée à des composants 20 déterminés.

L'aéronef 2 comprend un système de gestion 38 de la batterie 8. Le système de gestion 38 de la batterie 8 comporte un module 40 de gestion de l'énergie EM connecté à un module 42 de contrôle MC lui-même connecté aux moteurs 4, 6 Eng. Les modules 40 et 42 peuvent se présenter sous la forme de calculateurs indépendants ou peuvent être intégrés à des calculateurs existants. Dans la forme de réalisation illustrée, le module 40 de gestion de l'énergie est un calculateur faisant partie du système avionique 12. Le module 42 est intégré à un calculateur indépendant faisant l'interface avec le moteur. Cependant toute autre forme de réalisation est envisageable. Le système avionique 12 est connecté au module 42 de contrôle MC. Le module 42 de contrôle MC est lié à la batterie 8 ainsi qu'au réseau 14 de communication lui permettant une connexion avec un ensemble de composants 20 de l'aéronef déterminés.

Dans le module de gestion 40 de l'énergie EM, sont stockées des fonctions disponibles, appelées dans ce qui suit « fonctions disponibles », ou encore désignées par l'expression en langue anglosaxonne « Available functions » pour une mission donnée de l'aéronef 2 susceptibles d'être utilisées par le moteur 4, 6, et permettant une assistance par la batterie 8 ; est également stockée la charge associée nécessaire à leur exécution comme il sera vu plus loin. Le module 42 de contrôle MC vérifie l'état des composants 20 nécessaires à l'exécution de chacune de ces fonctions disponibles transmises par le module 40 ainsi que le niveau de charge de la batterie 8 pour permettre d'autoriser leur exécution.

Le procédé de gestion de l'énergie décrit plus loin se base plus précisément sur un plan de gestion de l'énergie pour une mission donnée de l'aéronef en question afin de recourir de manière optimale à l'assistance électrique et à garantir des fonctions de sécurité comme vu plus loin. Le plan d'énergie prévoit des recharges de la batterie à des moments opportuns. Le module 40 de gestion de l'énergie vérifie tout au long de la mission que la consommation d'énergie est en concordance avec le plan : le module 40 a connaissance du niveau de charge de la batterie 8 par le module 42 de contrôle. La mission correspond à l'ensemble des opérations d'un aéronef pour un vol donné depuis un lieu d'embarquement à un lieu de débarquement des passagers. En effet lors des phases de roulage avant le décollage et après l'atterrissage voire même lors d'opérations telles que l'arrêt des moteurs, l'aéronef peut recourir à une assistance électrique pour assurer des opérations. La mission comprend donc des opérations précédant et suivant le vol proprement dit de l'aéronef. Le module 40 de gestion de l'énergie EM stocke le plan de gestion de l'énergie électrique. Avant un vol, le plan de gestion de l'énergie est établi pour la mission concernée et un membre de l'équipage entre le plan de gestion de l'énergie correspondant au vol en question dans le module 40 lorsque l'aéronef est au sol à l'aide d'une interface homme machine prévue à cet effet. Le plan de vol peut également être téléchargé depuis le sol.

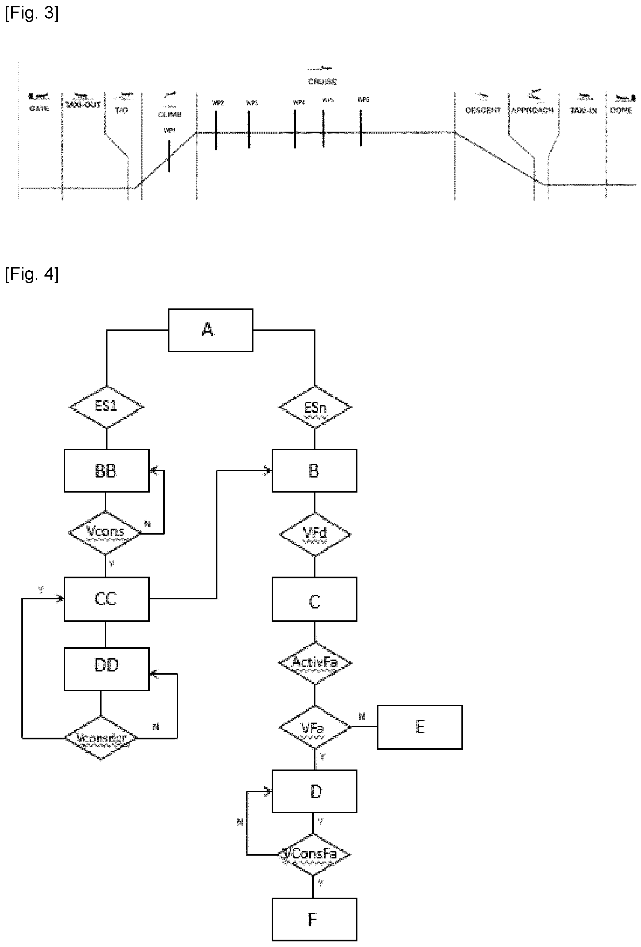

Afin d'optimiser l'utilisation de l'énergie pour une mission donnée, les différentes phases opérationnelles d'un aéronef ne nécessitent pas les mêmes besoins et pour une phase donnée suivant par exemple des contraintes provenant du contrôle aérien ou encore de changements météo, les besoins évoluent en cours de route. La présente invention consiste donc comme montré sur la figure 3 à segmenter l'ensemble d'une mission d'un aéronef : pour chaque segment est prévu un ensemble de fonctions nécessaires pouvant recourir à une assistance électrique alimentée par la batterie et il est calculé une quantité d'énergie électrique nécessaire provenant de la batterie 8 pour assurer la réalisation de ces fonctions. Une même fonction peut se retrouver sur plusieurs segments (voire l'ensemble) mais pas forcément avec les mêmes conditions d'utilisation. Ainsi une fonction d'accélération peut être indispensable au décollage mais pas forcément en croisière.

La mission d'un aéronef 2 se décompose en un ensemble de segments qui peuvent être établis de multiples façons. Le nombre de segments dépend de la longueur de la mission. Est décrit dans ce qui suit et illustré sur la figure 3 une manière possible de diviser la mission en segments. Le pilotage d'un avion est réalisé le long d'un plan de vol comportant un ensemble de points de passage (en langue anglosaxonne appelé waypoints). Les segments dans la forme illustrée sont définis suivant les phases de vol (comprenant les phases au sol) depuis le lieu d'embarquement jusqu'au lieu de débarquement et par exemple également suivant les points de passage. Ainsi, comme représenté sur la figure 3, un segment peut correspondre à une phase de vol : le segment de parcage au lieu d'embarquement appelé « GATE », le segment de roulage avant décollage appelé « TAXI OUT », le segment de décollage appelé « T/O », le segment de montée jusqu'à une première altitude de croisière appelé « CLIMB », le segment de croisière appelé « CRUISE », le segment de descente appelé « DESCENT », le segment d'atterrissage appelé « APPROACH », le segment de roulage après atterrissage appelé « TAXI IN », le segment de parcage au lieu de débarquement appelé « DONE ». Certains de ces segments peuvent être subdivisés en plusieurs segments établis par exemple à l'aide des points de passage (WP1 à WP6 sur la figure 3). Le segment de montée pourrait ainsi être divisé en plusieurs segments : le segment de montée « CLIMB » par exemple est comme montré sur la figure 3, composé de deux segments. La phase de croisière est la plus longue des phases opérationnelles d'un aéronef. Elle est donc subdivisée en plusieurs segments. Le plan de gestion de l'énergie prévoit pour chaque segment les fonctions pouvant recourir à une assistance électrique pour le segment en question et la charge correspondante nécessaire à leurs réalisations pour le segment donné.

Une partie de la charge de la batterie 8 est allouée pour les fonctions de sécurité (en langue anglo-saxonne safety) et ne doit en aucun cas être utilisée pour d'autres fonctions. Une fonction de sécurité est par exemple la fonction d'assistance au redémarrage des moteurs, ou encore l'alimentation de calculateurs en cas de perte de génération électrique. Ainsi un niveau de charge minimal est calculé pour que toutes les fonctions de sécurité susceptibles d'être réalisées par assistance électrique puissent être disponibles et réalisables dans leur entièreté. Un delta de charge supplémentaire peut être prévu en plus pour déterminer ce niveau minimal. Ce delta peut être la somme d'un delta spécifique à chaque fonction ou un delta global pour l'ensemble des fonctions. Le niveau de charge minimal correspond à un seuil en dessous duquel le niveau de la charge de la batterie ne doit pas passer. Le module 40 vérifie en continu comme il sera vu plus loin la consommation d'énergie par rapport au plan d'énergie prévu pour assurer ce niveau minimal de charge à la batterie : pour ce faire, il s'assure de manière régulière que la consommation d'énergie ne dépasse pas d'une certaine quantité donnée la consommation prévue par le plan d'énergie. Le module 40 effectue en continu ce contrôle pour interrompre l'assistance électrique en cas de dépassement dû à une anomalie. Le module 40 peut de manière optionnelle également vérifier en continu que le niveau de charge est bien supérieur au niveau minimal, vérification additionnelle pour garantir l'exécution des fonctions de sécurité jusqu'à la fin de la mission.

Le module 40 de gestion de l'énergie peut également stocker des plans de gestion dégradés, à savoir des plans alternatifs de gestion de l'énergie auxquels le système a recours en cas d'anomalie. Une anomalie peut être de nature variée comme par exemple une défaillance d'un composant, une panne électrique, un changement de route ayant un impact tel sur la consommation d'énergie que cela pourrait conduire comme il sera détaillé plus loin à ne plus assurer une charge minimale à la source d'énergie permettant de garantir l'exécution des fonctions de sécurité. Ces anomalies sont prises en considération pour dérouler de nouveaux plans de gestion dits dégradés afin d'assurer cette charge minimale. Ces anomalies sont soit de type connu soit découvertes au fil des vols et recensées. Lorsqu'un nouveau plan dégradé est proposé au pilote, il y a toujours des plans alternatifs moins optimisés, appelés plans dégradés également, qui seront également affichés pour le cas où le pilote ne validerait pas le premier plan dégradé proposé. Il est également possible de prévoir des plans de gestion dégradés au choix de la compagnie et/ou du pilote. Des exemples de fonctions disponibles sont l'assistance au démarrage moteur (actionnement du démarreur) ou l'assistance à l'accélération moteur lorsque l'aéronef souhaite accélérer au sol ou en vol. La fonction d'assistance à l'arrêt des moteurs en est une autre ou encore les fonctions ralenti, refroidissement du moteur.

Selon un mode optionnel de la présente invention, le module 40 de gestion de l'énergie EM est accessible par le pilote. En effet, en cas de changement dû à une anomalie, le pilote a accès au module 40 pour modifier le plan de gestion de l'énergie prévu. Dans cette alternative, plusieurs options sont possibles. L'une d'elles consiste à proposer au pilote des plans de gestion d'énergie dégradés comme vu plus haut. Un mode dégradé peut se substituer au mode principal lorsque des conditions sont réunies à la demande du pilote ou de manière automatique comme il sera vu plus loin.

La description qui suit décrit le procédé de gestion de l'énergie illustré sur la figure 4 utilisant le système détaillé ci-dessus. Le procédé de gestion de l'énergie comprend une étape A d'établissement du plan d'énergie pour une mission d'un aéronef déterminé ainsi que des plans dégradés en cas d'anomalies. Le ou les plans en question sont stockés dans le module 40 de gestion d'énergie EM. D'autres formes de réalisation sont possibles dans lesquelles les plans peuvent être élaborés en partie automatiquement.

Lorsque la mission de l'aéronef débute, sont déterminés à une fréquence donnée les fonctions disponibles et dans l'exemple qui suit à chaque entrée dans un segment donné. Le système 12 avionique transmet des paramètres PARAM1 signifiant l'entrée dans un segment de vol au module 40 EM de gestion de l'énergie. Lors de chaque entrée dans un segment déterminé ESn, le module 40 de gestion d'énergie EM transmet dans une deuxième étape B (dite étape de transmission de fonctions disponibles) au module MC de contrôle 42 l'ensemble des fonctions disponibles Fd pour le segment en question ainsi que la charge associée nécessaire pour chacune de ces fonctions pour ce même segment selon le plan d'énergie de la mission ou selon un plan dégradé après mise à jour comme il sera vu plus loin. Le module de contrôle MC vérifie que toutes les fonctions disponibles nécessaires pour le segment en question peuvent fonctionner correctement. Ainsi le module de contrôle 42 vérifie si l'ensemble des composants 20 nécessaires à l'exécution de chacune de ces fonctions fonctionne correctement. Il vérifie également la charge de la batterie 8 si elle est suffisante pour la charge allouée à chacune de ces fonctions. Si tel est le cas (VFd), le module 42 de contrôle MC transmet dans une quatrième étape C (dite étape de transmission des fonctions autorisées Fa) au module 11 d'activation FA du moteur ENG la ou les fonctions autorisées et la charge nécessaire correspondante. Le calculateur 10 moteur lorsqu'il a besoin d'activer (ActivFa) le moteur pour réaliser une fonction f1, vérifie (VFa) que la fonction f1 est une fonction autorisée et si tel est le cas (Y), dans une étape D, active la fonction f1 pour recourir à l'assistance électrique. Dans la forme illustrée, le calculateur étant connecté au module d'activation FA mais indépendant, soit le module FA transmet les fonctions autorisées dès réception, soit le calculateur interroge le module d'activation lorsque nécessaire pour les obtenir. Si la fonction f1 n'est pas une fonction autorisée (N), le moteur fonctionne dans une étape E sans recourir à l'assistance électrique. Si la fonction f1 est activée, tout au long de l'exécution de la fonction autorisée activée f1, le module 42 contrôle sa consommation VConsFa. Dans le cas où la consommation lors de l'exécution de la fonction f1 dans le segment concerné dépasse celle prévue d'un certain montant déterminé ou en cas d'anomalie (Y), dans une étape F, le module 42 de contrôle envoie un signal au calculateur moteur EC lui indiquant que l'autorisation pour la fonction f2 en cours est retirée au bout d'un certain nombre de secondes permettant de laisser le temps au calculateur moteur EC de se configurer en mode sans assistance électrique.

Dès l'entrée dans le premier segment ES1, le module 40 de gestion d'énergie dans une étape BB contrôle en continu que la consommation en énergie soit en concordance avec le plan d'énergie de la mission, qu'il n'y ait pas d'anomalie par rapport au plan d'énergie établi. Le module 40 peut de manière additionnelle vérifier que le niveau de charge de la batterie n'atteint pas un seuil en-deçà duquel il ne faut pas aller pour assurer les fonctions de sécurité. En effet, il est primordial de s'assurer que soit préservée dans la batterie une certaine charge minimale permettant à des fonctions de sécurité de fonctionner. Il est prévu pour chaque fonction disponible une quantité d'énergie associée égale ou supérieure à celle nécessaire à son fonctionnement pour permettre d'assurer cette charge minimale de la batterie en cas de recours à des fonctions de sécurité.

En cas d'anomalie Vcons (Y), le plan d'énergie doit être mis à jour. Dans une étape CC, le module de gestion de l'énergie transmet au module 32 FMS un ou plusieurs plans dégradés qui sont proposés au pilote qui les valide ou pas. S'il en valide un, le nouveau plan d'énergie dégradé est pris pour référence et mis à jour dans le module de gestion 40. S'il n'en valide aucun, un plan dégradé de secours est validé de manière automatique au bout d'un certain nombre de secondes. Selon une autre forme de réalisation possible, dans l'étape CC, le plan dégradé est automatiquement exécuté et le pilote en est informé. Le pilote peut à tout moment modifier le plan dégradé en cours.

Dans le cas où un plan dégradé est validé, le module de gestion de l'énergie met à jour le plan d'énergie en cours et redéfinit les fonctions disponibles correspondant au nouveau plan dégradé comme indiqué plus haut à l'étape B (quand le plan d'énergie est mis à jour). Le procédé se déroule alors tel que décrit ci-dessus depuis l'étape B sur la base du plan d'énergie mis à jour, à savoir le plan d'énergie dégradé. Par ailleurs, de la même façon que pour le plan d'énergie initial, le module 40 de gestion d'énergie dans une étape DD contrôle en continu que la consommation en énergie soit en concordance avec le plan d'énergie dégradé mis à jour et qu'il n'y ait pas d'anomalie par rapport au plan d'énergie mis à jour ; de manière optionnelle, le module vérifie que le niveau de charge de la batterie est bien supérieur au niveau minimal défini plus haut. Si tel est le cas Vconsdgr (Y), à nouveau le procédé reprend le déroulement depuis l'étape CC pour déterminer un nouveau plan d'énergie dégradé.

Ainsi le système et le procédé selon la présente invention en prévoyant en avance des plans dégradés optimisés d'utilisation de la batterie en terme d'assistance électrique permet de calculer et utiliser au plus juste le carburant alloué à une mission pour une quantité de charge de batterie donnée.

## Revendications

1. Aéronef comportant un système de gestion de l'énergie d'une source en énergie électrique (7) dans une architecture de propulsion hybride électrique comprenant au moins un moteur thermique (4, 6) utilisant une combustion de carburant et ladite source en énergie électrique, l'aéronef comportant un système avionique (12) et des composants (20) communiquant des paramètres de l'aéronef, l'aéronef comprenant:
- un module (40) de gestion de l'énergie EM dans lequel sont stockées des fonctions disponibles pour une mission donnée de l'aéronef (2) susceptibles d'être utilisées par le moteur (4, 6) et permettant une assistance par la source (7) ainsi que la charge nécessaire associée nécessaire à leur exécution ;
- un module (42) de contrôle MC de l'état des composants (20) nécessaires à l'exécution de chacune de ces fonctions disponibles qui ont été transmises par le module de gestion avec lequel il est en liaison ainsi que de la quantité d'énergie nécessaire susceptible d'être délivrée par la source (7) permettant d'autoriser leur exécution et de garantir celle des fonctions de sécurité, le module de contrôle étant lié auxdits composants (20), à la source en énergie électrique (7) ainsi qu'à un module d'activation du moteur (4, 6) pour lui transmettre les fonctions autorisées suivant le contrôle effectué.

2. Aéronef selon la revendication 1, **caractérisé en ce que** le module (40) de gestion de l'énergie EM stocke un plan de gestion de l'énergie permettant de garantir l'exécution des fonctions de sécurité et prévoyant pour l'ensemble d'une mission, un ensemble de fonctions disponibles par segment de mission donné et une quantité d'énergie nécessaire pour chaque fonction pour ledit segment.

3. Aéronef selon la revendication 2, **caractérisé en ce que** le module (40) de gestion de l'énergie EM stocke des plans de gestion dégradés de l'énergie prévoyant des mises à jour du plan de gestion en cas d'anomalies.

4. Procédé de gestion de l'énergie d'une source en énergie électrique (7) dans un aéronef selon l'une des revendications 1 à 3, comprenant les étapes suivantes :
- à la réception de paramètre(s) aéronef déterminé(s) (ESn), transmission (étape B) d'un ensemble de fonctions disponibles stockées dans le module (40) de gestion de l'énergie associé à ces paramètres au module (42) de contrôle et de la charge nécessaire à l'exécution de ces fonctions et vérification par le module (42) de contrôle du bon fonctionnement des composants (20) de l'aéronef nécessaire à l'exécution des fonctions disponibles reçues et de la quantité d'énergie électrique de la source (7) qui doit être suffisante pour assurer leur exécution et celle des fonctions de sécurité;
- si les fonctions disponibles (20) peuvent fonctionner correctement et la quantité d'énergie susceptible d'être délivrée par la source (7) est suffisante (VFd), le module de contrôle autorise (étape C) l'exécution des fonctions et transmet les fonctions autorisées au module (11) d'activation du moteur ;
- lorsque le moteur active une fonction autorisée (ActivFa), tout au long de l'exécution de ladite fonction, le module de contrôle vérifie (étape D) que ladite fonction autorisée ne consomme pas de manière anormale et si tel est le cas, le module de contrôle indique au moteur que l'autorisation pour la fonction en question est retirée (étape F).

5. Procédé selon la revendication 4, **caractérisé en ce que** lorsque la consommation lors de l'exécution d'une fonction autorisée dépasse de manière anormale celle prévue d'un certain montant déterminé, à l'étape F, le module (42) de contrôle envoie un signal au calculateur moteur EC lui indiquant que l'autorisation pour ladite fonction autorisée en cours est retirée au bout d'un certain nombre de secondes permettant de laisser le temps au calculateur moteur EC de se configurer en mode sans assistance électrique.

6. Procédé selon l'une des revendications 4 ou 5, **caractérisé en ce que** dans une première étape A, des fonctions disponibles pour une mission de l'aéronef sont stockées dans le module (40) de gestion de l'énergie ainsi que la charge nécessaire associée nécessaire à leur exécution.

7. Procédé selon l'une des revendications 4 à 6, **caractérisé en ce que** lorsque le calculateur (10) moteur EC reçoit une demande d'activation d'une fonction, il vérifie (VFa) que la fonction est autorisée pour recourir à l'assistance électrique et exécuter la fonction concernée.

8. Procédé selon les revendications 2 et 4, **caractérisé en ce que** le module de gestion de l'énergie (40) vérifie en continu que la consommation en énergie est en concordance avec le plan d'énergie de la mission (étape BB) de manière à garantir un niveau de charge minimal pour l'exécution des fonctions de sécurité et en cas d'anomalie Vcons (Y), le plan d'énergie est mis à jour dans une étape CC et remplacé par un plan d'énergie dégradé.

9. Procédé selon la revendication 8, **caractérisé en ce que** le module de gestion de l'énergie (40) vérifie en continu que la consommation en énergie est en concordance avec le plan d'énergie dégradé (étape DD) de manière à garantir un niveau de charge minimal pour l'exécution des fonctions de sécurité et en cas d'anomalie Vconsdgr (Y), le plan d'énergie est mis à jour dans une étape CC et remplacé par un autre plan d'énergie dégradé.

## Patentansprüche

1. Luftfahrzeug, umfassend ein System zum Managen der Energie einer elektrischen Energiequelle (7) in einer elektrischen hybriden Antriebsarchitektur, die mindestens einen Verbrennungsmotor (4, 6), der eine Verbrennung von Kraftstoff einsetzt, und die elektrische Energiequelle aufweist, das Luftfahrzeug umfassend ein Avioniksystem (12) und Komponenten (20), die Parameter des Luftfahrzeugs übermitteln, das Luftfahrzeug umfassend:
- ein Energiemanagementmodul EM (40), in dem für einen gegebenen Einsatz des Luftfahrzeugs (2) verfügbare Funktionen, die von dem Motor (4, 6) verwendet werden können und eine Unterstützung durch die Quelle (7) ermöglichen, sowie die für ihre Ausführung erforderliche zugeordnete Ladung gespeichert sind;
- ein Kontrollmodul MC (42) zur Kontrolle des Zustands der Komponenten (20), die zur Ausführung jeder dieser verfügbaren Funktionen erforderlich sind, die von dem Managementmodul, mit dem es in Verbindung steht, übertragen wurden, sowie der erforderlichen Energiemenge, die von der Quelle (7) bereitgestellt werden kann und es ermöglicht, ihre Ausführung zu autorisieren und die der Sicherheitsfunktionen zu garantieren, wobei das Kontrollmodul mit den Komponenten (20), mit der elektrischen Energiequelle (7) sowie mit einem Modul zur Aktivierung des Motors (4, 6) verbunden ist, um an ihn die entsprechend der durchgeführten Kontrolle autorisierten Funktionen zu übertragen.

2. Luftfahrzeug nach Anspruch 1, **dadurch gekennzeichnet, dass** das Energiemanagementmodul EM (40) einen Energiemanagementplan speichert, der es ermöglicht, die Ausführung der Sicherheitsfunktionen zu garantieren, und für einen gesamten Einsatz einen Satz verfügbarer Funktionen je gegebenem Einsatzsegment und eine für jede Funktion für das Segment erforderliche Energiemenge vorsieht.

3. Luftfahrzeug nach Anspruch 2, **dadurch gekennzeichnet, dass** das Energiemanagementmodul EM (40) degradierte Energiemanagementpläne speichert, die im Falle von Anomalien Aktualisierungen des Managementplans vorsehen.

4. Verfahren zum Managen der Energie einer elektrischen Energiequelle (7) in einem Luftfahrzeug nach einem der Ansprüche 1 bis 3, umfassend die folgenden Schritte:
- beim Empfangen von einem oder mehreren bestimmten Luftfahrzeugparameter(n) (ESn), Übertragen (Schritt B) eines Satzes von in dem Energiemanagementmodul (40) gespeicherten verfügbaren Funktionen, der diesen Parametern zugeordnet ist, an das Kontrollmodul (42) und der zur Durchführung dieser Funktionen erforderlichen Ladung und Überprüfen, durch das Kontrollmodul (42), der einwandfreien Funktionsweise der Komponenten (20) des Luftfahrzeugs, die zur Ausführung der empfangenen verfügbaren Funktionen erforderlich sind, und der Menge elektrischer Energie der Quelle (7), die ausreichen muss, um ihre Ausführung und die der Sicherheitsfunktionen zu garantieren;
- falls die verfügbaren Funktionen (20) ordnungsgemäß funktionieren können und die Energiemenge, die von der Quelle (7) bereitgestellt werden kann, ausreicht (VFd), autorisiert (Schritt C) das Kontrollmodul die Ausführung der Funktionen und überträgt die autorisierten Funktionen an das Motoraktivierungsmodul (11);
- wenn der Motor eine autorisierte Funktion aktiviert (ActivFa), überprüft (Schritt D) das Kontrollmodul während der gesamten Ausführung der Funktion, dass die autorisierte Funktion nicht anormal verbraucht, und falls dies der Fall ist, gibt das Kontrollmodul dem Motor an, dass die Autorisierung für die betreffende Funktion zurückgenommen wird (Schritt F).

5. Verfahren nach Anspruch 4, **dadurch gekennzeichnet, dass**, wenn der Verbrauch bei der Ausführung einer autorisierten Funktion den vorgesehenen anormal um einen gewissen bestimmten Betrag überschreitet, das Kontrollmodul (42) im Schritt F ein Signal an das Motorsteuergerät EC sendet, das ihm angibt, dass die Autorisierung für die laufende autorisierte Funktion nach einer bestimmten Anzahl von Sekunden zurückgenommen wird, was es ermöglicht, dem Motorsteuergerät EC die Zeit zu lassen, sich in die Betriebsart ohne elektrische Unterstützung zu versetzen.

6. Verfahren nach einem der Ansprüche 4 oder 5, **dadurch gekennzeichnet, dass** in einem ersten Schritt A für einen Einsatz des Luftfahrzeugs verfügbare Funktionen sowie die für ihre Ausführung erforderliche zugeordnete Ladung in dem Energiemanagementmodul (40) gespeichert werden.

7. Verfahren nach einem der Ansprüche 4 bis 6, **dadurch gekennzeichnet, dass**, wenn das Motorsteuergerät EC (10) eine Anforderung zur Aktivierung einer Funktion empfängt, es überprüft (VFa), dass die Funktion autorisiert ist, auf die elektrische Unterstützung zurückzugreifen und die betroffene Funktion auszuführen.

8. Verfahren nach den Ansprüchen 2 und 4, **dadurch gekennzeichnet, dass** das Energiemanagementmodul (40) kontinuierlich überprüft, dass der Energieverbrauch mit dem Energieplan des Einsatzes übereinstimmt (Schritt BB), so dass ein Mindestladestand für die Ausführung der Sicherheitsfunktionen garantiert ist, und im Fall einer Anomalie Vcons (Y) der Energieplan in einem Schritt CC aktualisiert und durch einen degradierten Energieplan ersetzt wird.

9. Verfahren nach Anspruch 8, **dadurch gekennzeichnet, dass** das Energiemanagementmodul (40) kontinuierlich überprüft, dass der Energieverbrauch mit dem degradierten Energieplan übereinstimmt (Schritt DD), so dass ein Mindestladestand für die Ausführung der Sicherheitsfunktionen garantiert ist, und im Fall einer Anomalie Vconsdgr (Y) der Energieplan in einem Schritt CC aktualisiert und durch einen anderen degradierten Energieplan ersetzt wird.

## Claims

1. Aircraft comprising an energy management system for an electrical energy source (7) in a hybrid electric propulsion architecture comprising at least one heat engine (4, 6) using fuel combustion and said electrical energy source, the aircraft comprising an avionics system (12) and components (20) conveying parameters of the aircraft, the aircraft comprising:
- an energy management EM module (40) that stores functions available for a given mission of the aircraft (2) that are likely to be used by the engine (4, 6) and allowing assistance from the source (7), as well as the necessary associated charge required for the execution thereof;
- a control module MC (42) for controlling the status of the components (20) required for executing each of these available functions that have been transmitted by the management module it is connected to, as well as the amount of required energy that can be delivered by the source (7) to authorise their execution and ensure the execution of the safety functions, the control module being linked to said components (20), to the electrical energy source (7) and to an engine activation module (4, 6) in order to send it the authorised functions according to the completed control.

2. Aircraft according to Claim 1, **characterized in that** the energy management EM module (40) stores an energy management plan to ensure the execution of the safety functions and provides, throughout a mission, a set of functions available per given mission segment and an amount of energy required for each function for said segment.

3. Aircraft according to Claim 2, **characterized in that** the energy management EM module (40) stores degraded energy management plans providing updates to the management plan in the event of anomalies.

4. Method for managing the energy of an electrical energy source (7) in an aircraft according to any of Claims 1 to 3, comprising the following steps:
- upon receiving specific aircraft parameter(s) (ESn), transmitting (step B) a set of available functions, stored in the energy management module (40), associated with these parameters to the control module (42) and the charge required for executing these functions and the control module (42) checking the proper operation of the aircraft components (20) required for executing the received available functions and the amount of electrical energy from the source (7) that must be sufficient to ensure the execution thereof and that of the safety functions;
- if the available functions (20) can operate correctly and the amount of energy likely to be delivered by the source (7) is sufficient (VFd), the control module authorises (step C) the execution of the functions and transmits the authorised functions to the module (11) for activating the engine;
- when the engine activates an authorised function (ActivFa), throughout the execution of said function, the control module checks (step D) that said authorised function does not consume abnormally and, if this is the case, the control module notifies the engine that the authorisation for the relevant function is withdrawn (step F).

5. Method according to Claim 4, **characterized in that** when the consumption while executing an authorised function abnormally exceeds the expected consumption by a certain determined amount, in step F, the control module (42) sends a signal to the engine computer EC notifying it that the authorisation for said current authorised function is withdrawn after a certain number of seconds to allow time for the engine computer EC to configure itself to the non-electrical assistance mode.

6. Method according to any of Claims 4 or 5, **characterized in that**, in a first step A, functions available for an aircraft mission are stored in the energy management module (40) together with the associated necessary charge required for the execution thereof.

7. Method according to any of Claims 4 to 6, **characterized in that** when the engine computer EC (10) receives a request to activate a function, it checks (VFa) that the function is authorised to use electrical assistance and execute the relevant function.

8. Method according to Claims 2 and 4, **characterized in that** the energy management module (40) continuously checks that the energy consumption matches the mission energy plan (step BB) so as to ensure a minimum charge level for executing the safety functions and, in the event of an anomaly Vcons (Y), the energy plan is updated in a step CC and is replaced by a degraded energy plan.

9. Method according to Claim 8, **characterized in that** the energy management module (40) continuously checks that the energy consumption matches the degraded energy plan (step DD) so as to ensure a minimum charge level for executing the safety functions and, in the event of an anomaly Vconsdgr (Y), the energy plan is updated in a step CC and is replaced by another degraded energy plan.
